# EUROPEAN PATENT APPLICATION

(11) **EP 1 338 988 A1**
(43) Date of publication of application: **27.08.2003**
(21) Application number: 01974786.4
(22) Date of filing: 11.10.2001
(51) Int. Cl.: G06F 17/60, H04N 7/173

(54) **ADVERTISEMENT SEGMENT TRANSACTION METHOD AND SYSTEM**

(30) Priority: 13.11.2000 JP 2000344954
(71) Applicant: Dentsu Inc., Tokyo 105-7001 (JP)
(72) Inventor: IIJIMA, Akio, Setagaya-Ku, Tokyo 158-0092 (JP); YUKAWA, Tomohiko, Nerima-Ku, Tokyo 178-0063 (JP)
(74) Representative: Skone James, Robert Edmund
(86) International application number: JP0108930
(87) International publication number: WO02039340

(57) **Abstract**

The present invention provides an advertisement time-frame transaction system comprising assigning means for selecting a viewer according to information about viewers and allowing an advertiser of an advertisement to assign an advertisement-viewing reward to the advertisement for the selected viewer, designating means for allowing the selected viewer to designate whether he/she will view the advertisement having the assigned advertisement-viewing reward, and hanging means for allowing the advertiser to change the advertisement-viewing reward of the advertisement in real time, depending on the information about the designation to be provided from the designating means when the viewer has designated whether he/she views the advertisement.

## Description

### FIELD OF THE INVENTION

The present invention relates to a transaction of advertisement time-frames in broadcasts through media for distributing information such as satellite communication. In particular, the present invention relates to a method and system of transacting advertisement time-frames in broadcasts through such media on an open market basis.

### BACKGROUND OF THE INVENTION

Heretofore, advertisement time-frames in broadcasts through media for distributing information such as a television, a satellite communication, particularly in sponsored free-broadcasts, have been transacted between a corporation as an advertiser or sponsor and the media offering advertisement time-frames through the intermediary of an advertising agency (or advertising company).

Late years, in line with the development of communication networks, such as satellite communication and Internet, and the advance of computer technologies, on-line media via Internet or the like dramatically come into wide use, in addition to media such as televisions and satellite broadcasts using conventional communication systems.

Further, as the advance of digital technologies allows advertisements to be separated from a program and handled independently, the concept of the advertisement time-frame has been changed from a program advertisement time-frame attached integrally to the program with disregard to the number of viewers, to a viewer-specified advertisement time-frame as a separated unit viewed by an individual viewer.

Viewer-specified advertisement time-frames which are accumulated for each of targets categorized by a sponsor according to a specific index is referred to as "target advertisement time-frame" herein.

In the rapid popularization of the on-line media, a new technology are also developing to allow a viewing state such as "when, where and by whom a broadcast through the on-line media is viewed" to be readily identified/determined.

As the viewing state can be more readily acquired, an advertisement market has stronger need of a target advertising performed with focusing on a specific group of viewers or a target, and thereby some associated method or system for coping with the demand has been developed.

However, when sponsors drive forward the target advertising using the above conventional method or system, specific target advertisement time-frames are disproportionately demanded by the majority of sponsors, while other target advertisement time-frames can receive orders only from limited or few sponsors. This has caused an undesirable situation where few target advertisement time-frames have demand overreaching supply, but most target advertisement time-frames has supply exceeding demand.

### SUMMARY OF THE INVENTION

In view of the above problems of the conventional technologies, it is therefore an object of the present invention to provide a method and system capable of allowing a plurality of sponsors to changeably assign an advertisement-viewing reward for each of target advertisement time-frames under an open and fair price competition to provide an adequate price and allocation of the target advertisement time-frames.

In order to achieve the object, the present invention provides an advertisement time-frame transaction system comprising: assigning means for selecting a viewer according to information of viewers and allowing an advertiser of an advertisement to assign an advertisement-viewing reward to the advertisement for the selected viewer; designating means for allowing the selected viewer to designate whether he/she will view the advertisement having the assigned advertisement-viewing reward; and changing means for allowing the advertiser to change the advertisement-viewing reward of the advertisement in real time, depending on the information about the designation to be provided from the designating means when the viewer has designated whether he/she views the advertisement.

Further, the present invention provides an advertisement time-frame transaction method comprising the steps of: selecting a viewer according to information about viewers; allowing an advertiser of an advertisement to assign an advertisement-viewing reward to the advertisement for the selected viewer; allowing the selected viewer to designate whether he/she will view the advertisement having the assigned advertisement-viewing reward; when the viewer has designated whether he/she views the advertisement, allowing the advertiser to change the advertisement-viewing reward of the advertisement in real time, depending on the information about the designation.

In the advertisement time-frame transaction system, the assigning means is operable to select a viewer according to information of viewers and allow an advertiser of an advertisement to assign an advertisement-viewing reward to the advertisement for the selected viewer. The designating means is operable to allow the selected viewer to designate whether he/she will view the advertisement having the assigned advertisement-viewing reward. Further, the changing means is operable to allow the advertiser to change the advertisement-viewing reward of the advertisement in real time, depending on the information about the designation to be provided from the designating means when the viewer has designated whether he/she views the advertisement.

### BRIEF DESCRIPTION OF THE DRAWINGS

Fig. 1 is a schematic block diagram showing an advertisement time-frame transaction system according to one embodiment of the present invention;
Fig. 2 is an explanatory flowchart of the operation of the advertisement time-frame transaction system of Fig. 1;
Fig. 3 is an explanatory flowchart of the operation of the advertisement time-frame transaction system of Fig. 1;
Fig. 4 is an explanatory flowchart of the operation of the advertisement time-frame transaction system of Fig. 1;
Fig. 5 is an explanatory flowchart of the operation of the advertisement time-frame transaction system of Fig. 1;
Fig. 6 is an explanatory view showing one example of an advertisement select screen to be displayed on a display unit of a terminal of the advertisement time-frame transaction system of Fig. 1;
Fig. 7 an explanatory view showing another example of the advertisement select screen to be displayed on the display unit of the terminal of the advertisement time-frame transaction system of Fig. 1;
Fig. 8 an explanatory view showing one example of an advertisement-viewing condition in the advertisement time-frame transaction system of Fig. 1; and
Fig. 9 is a schematic block diagram showing an advertisement time-frame transaction system according to another embodiment of the present invention.

### DESCRIPTION OF THE PREFERRED EMBODIMENT

With reference to the drawings, various advertisement time-frame transaction methods and systems according to embodiments of the present invention will now be described in detail.

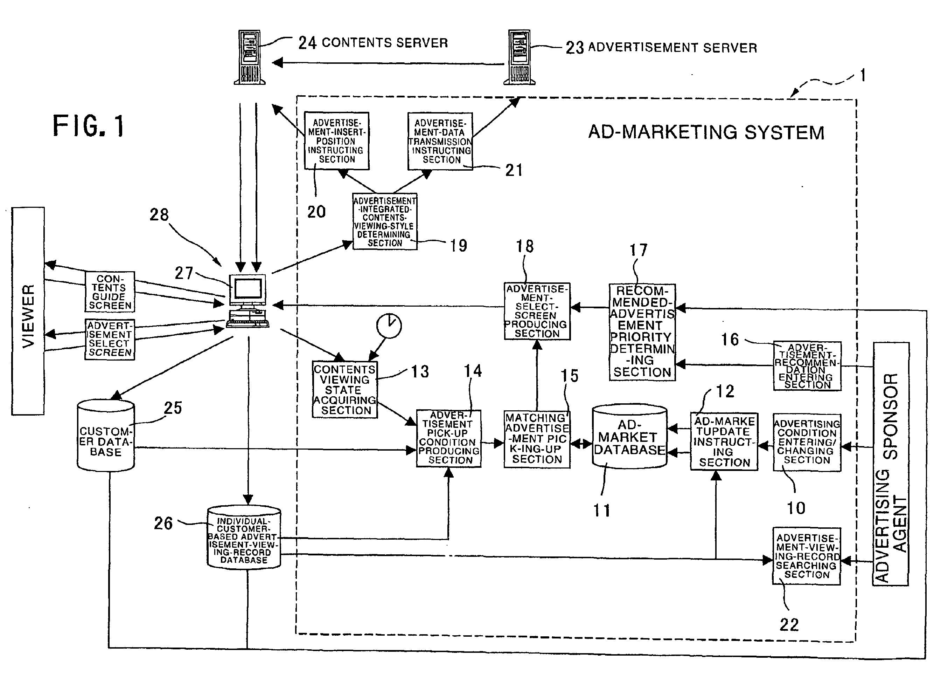

Fig. 1 is a schematic block diagram showing an advertisement time-frame transaction system according to one embodiment of the present invention.

In this embodiment, the advertisement time-frame transaction system 1 comprises;
an advertisement-viewing condition entering/changing section 10 for entering/changing advertisement attribution information about the attribution of each of advertisements and an advertisement-viewing reward for each of advertisement-viewing conditions imposed by the advertiser,
an ad-market database 11 for storing the advertisement attribution information and the advertisement-viewing rewards which are entered/changed by the advertisement-viewing condition entering/changing section 10,
an ad-market update instructing section 12 for identifying the advertisement attribution information and the advertisement-viewing rewards entered/changed by the advertisement-viewing condition entering/changing section 10, and registering/overwritingly registering them in the ad-market database 11,
a contents viewing state acquiring section 13 for acquiring a viewing state in response to entered information about a contents ID of a specific contents, a scheduled time for viewing the contents, and date/weather, to provide viewing state information,
an advertisement pick-up condition producing section 14 for producing a pick-up condition of one or more advertisement matching with a viewer α, according to customer information, the viewing state information and advertisement viewing record, and providing the advertisement pick-up condition,
a matching advertisement picking-up section 15 for picking up the information about the advertisements matching with the viewer α and the information about corresponding attributions and rewards from the ad-market database 11 according to the advertisement pick-up condition received from the advertisement pick-up condition producing section 14,
an advertisement-recommendation entering section 16 for providing information about one or more recommended advertisements in response to entered advertisement recommendation information (designation of one or more advertisements to be recommended, recommendation text, special incentive or the like),
a recommended-advertisement priority determining section 17 for producing recommended-advertisement priority information about a priority of the recommended-advertisements according to the advertisement recommendation information, the customer information and the individual-customer-based advertisement viewing record, and providing the recommended-advertisement priority information,
an advertisement-select-screen producing section 18 for producing an advertisement select screen according to the information about the advertisements matching with the viewer α, the information about the corresponding attributions and rewards, and the recommended-advertisement priority information, and providing the advertisement select screen,
an advertisement-integrated-contents-viewing-style determining section 19 for allowing the viewer α who has checked the advertisements and the corresponding rewards displayed on the advertisement select screen to determine or designate one or more advertisements to be inserted in the contents, and providing the resulting viewing style information,
an advertisement-insert-position instructing section 20 for providing to an after-mentioned contents server 24 information about a position where the designated advertisement is to be inserted, according to the viewing style information received from the advertisement-integrated-contents-viewing-style determining section 19,
an advertisement-data transmission instructing section 21 for providing to an after-mentioned advertisement server 23 information about an instruction of transmitting one or more advertisements to be inserted, according to the viewing style information received from the advertisement-integrated-contents -viewing-style determining section 19, and
an advertisement-viewing-state searching section 22 for searching a viewing record of the advertisement.

The advertisement time-frame transaction system 1 of Fig. 1 further includes;
the advertisement server 23 for providing the data of the designated advertisement for the corresponding advertisement insert position, according to the received advertisement-insert-instruction information,
the contents server 24 for producing a combination data of the contents data and the advertisement data according to the advertisement-insert-position information and the advertisement data to provide the combination data as an advertisement-integrated-contents data,
a customer database 25 for storing customer information such as the attribute, preference, or the like of the viewer α.
an individual-customer-based advertisement viewing record database 26 for storing an advertisement viewing record (or information about the ID of the advertisement which has been viewed up to the upper limit number of times) of the viewer α, and
a terminal 28 having a display unit 27 for displaying a guide screen (screen for making an application for viewing) of contents X, an advertisement-select-screen for allowing a viewer to select one or more desired advertisements, and/or the advertisement-integrated-contents.

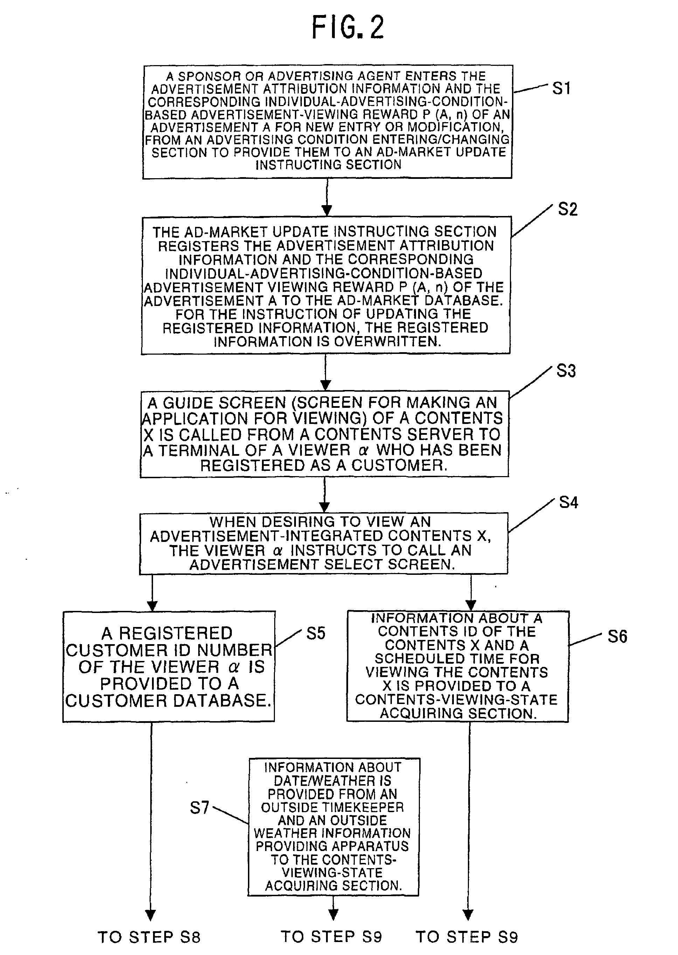

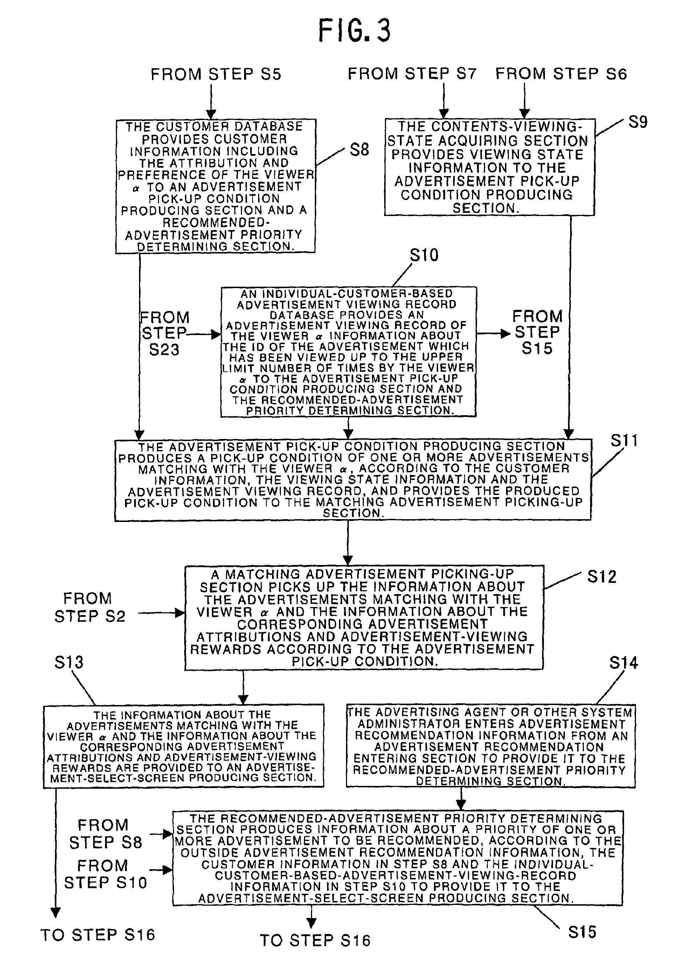

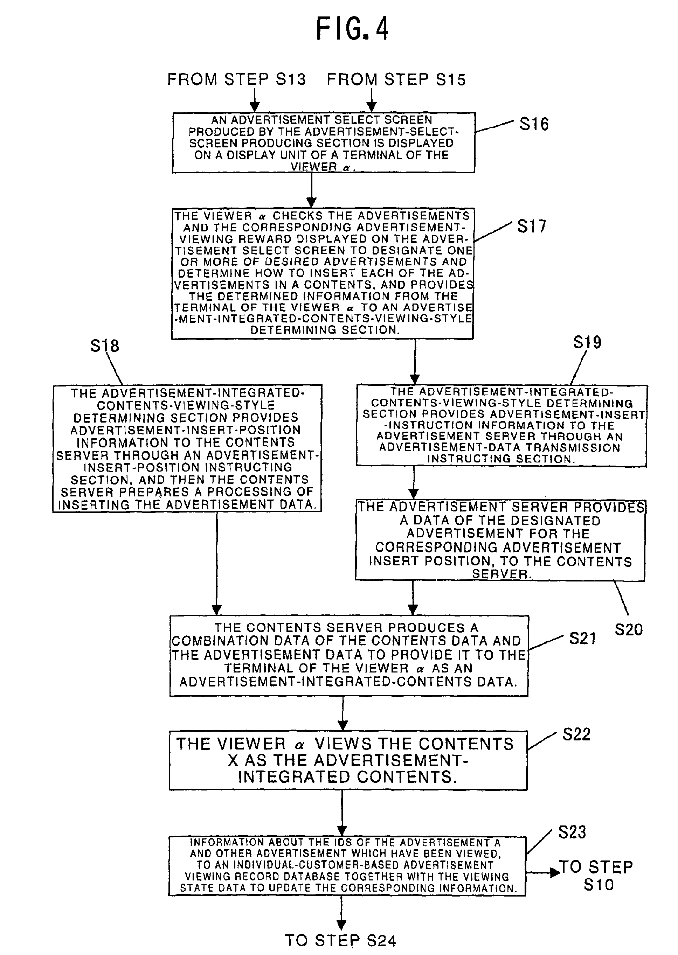

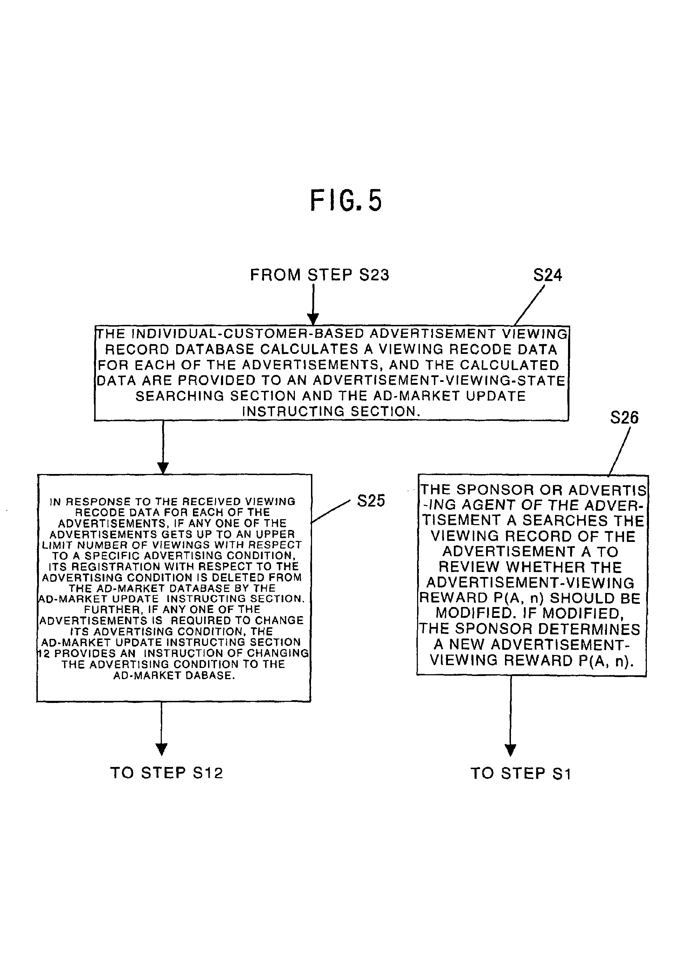

With reference to the flowcharts of Figs. 2 to 5, the operation of the system of Fig. 1 will be described in detail below.

A sponsor or advertising agent enters the advertisement attribution information of an advertisement A and the corresponding advertisement-viewing reward P (A, n) for each of advertisement-viewing conditions n imposed by the advertiser, from the advertisement-viewing condition entering/changing section 10, and the advertisement-viewing condition entering/changing section 10 provides such information to the ad-market update instructing section 12 (Step S1).

When the ad-market update instructing section 12 is determined that the advertisement attribution information and the corresponding individual-advertisement-viewing condition n - based advertisement-viewing reward P (A, n) of the advertisement A received from the advertising condition entering/changing section 10 are new information, the ad-market update instructing section 12 registers them to the ad-market database 11. When the ad-market update instructing section 12 is determined that the advertisement attribution information and the corresponding individual-advertisement-viewing condition n - based advertisement-viewing reward P (A, n) of the advertisement A received from the advertising condition entering/changing section 10 are modified information, the ad-market update instructing section 12 overwritingly registers them to the ad-market database 11 to update corresponding registered information (Step S2).

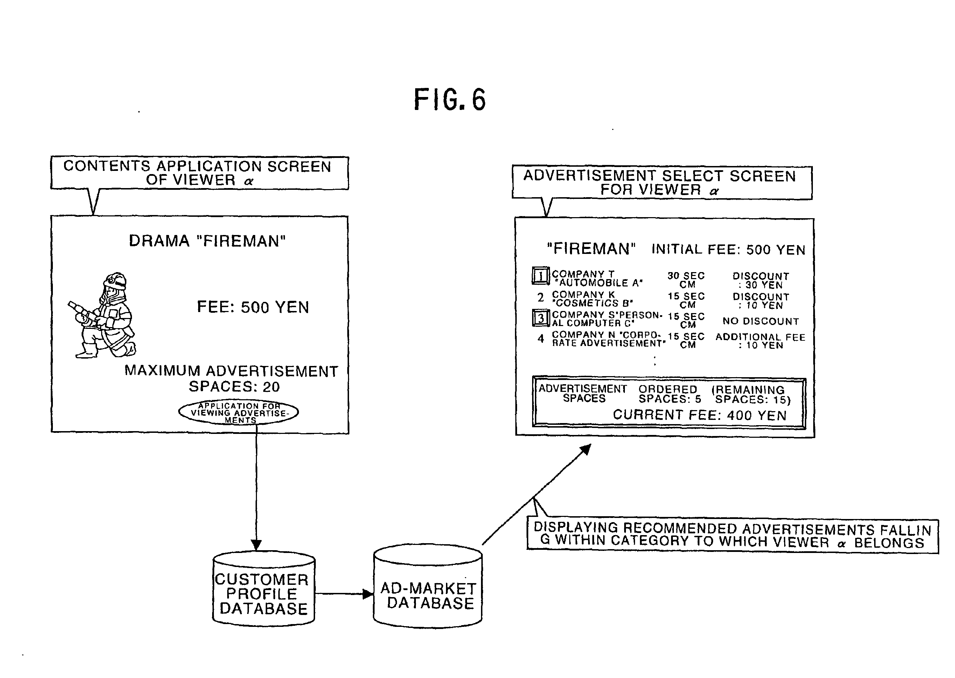

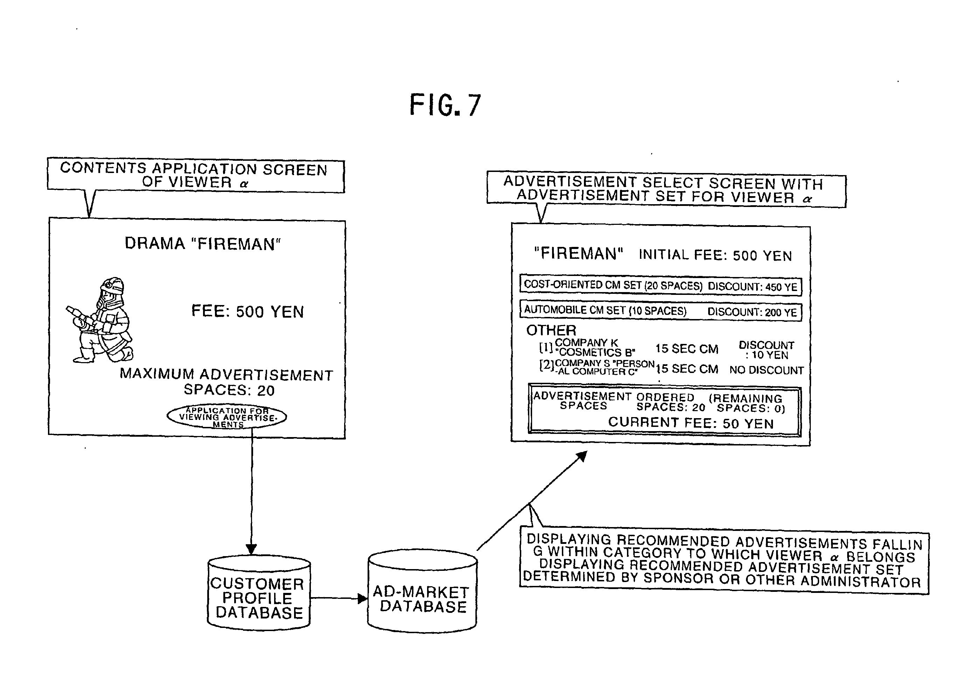

The guide screen (screen for making an application for viewing) of the contents X as shown in Fig. 6 or 7 is called from the contents server 24 to the terminal 28 of the viewer α who has been registered as a customer, and is displayed on the display unit 27 of the terminal 28 (Step S3). Then, when the viewer α desires to view the advertisement-integrated contents X, the viewer α instructs to call the advertisement select screen (Step S4).

In response to the instruction of the above calling, the terminal provides a registered customer ID number of the viewer α to the customer database 25 (Step S5), and provides information about a scheduled time for viewing the contents X and a contents ID of the contents X to the contents-viewing-state acquiring section 13 (Step S6). Further, information about date/weather is provided from an outside calendar/timekeeper and an outside weather information providing apparatus (not shown) to the contents-viewing-state acquiring section 13 (Step S7).

Subsequently to Step S5, the customer database provides customer information such as the attribution, preference or the like of the viewer α to the advertisement pick-up condition producing section 14 and the recommended-advertisement priority determining section 17 (Step S8).

Subsequently to Steps S6 and S7, the contents-viewing-state acquiring section 13 provides viewing state information to the advertisement pick-up condition producing section 14 (Step S9).

Further, the individual-customer-based advertisement viewing record database 26 provides an advertisement viewing record (or information about the ID of the advertisement which has been viewed up to the upper limit number of times) of the viewer α received from after-mentioned Step S 23 to the advertisement pick-up condition producing section 14 and the recommended-advertisement priority determining section 17 (Step S10).

The advertisement pick-up condition producing section 14 produces a pick-up condition of one or more advertisements matching with the viewer α, according to the customer information, the viewing state information and the advertisement viewing record, and provides the produced pick-up condition to the matching advertisement picking-up section 15 (Step S11).

In Step S2 and Step S11, the matching advertisement picking-up section 15 picks up the information about the advertisements matching with the viewer α and the information about the corresponding attributions and rewards according to the advertisement pick-up condition from the ad-market database 11 (Step S 12).

Subsequently to Step S12, the information about the advertisements matching with the viewer α and the information about the corresponding attributions and rewards are provided from the matching advertisement picking-up section 15 to the advertisement-select-screen producing section 18 (Step S13).

The advertising agent or other administrator enters advertisement recommendation information (designation of one or more advertisements to be recommended, recommendation text, special incentive, set of recommended advertisements or the like), from the advertisement recommendation entering section 16, and the advertisement recommendation entering section 16 provides the entered advertisement recommendation information to the recommended-advertisement priority determining section 17 (Step S14).

The recommended-advertisement priority determining section 17 produces information about a priority of one or more advertisement to be recommended, according to advertisement recommendation information from the advertising agent or other administrator, the customer information as described in Step S8 and the individual-customer-based-advertisement-viewing-record information as descried in Step S10, and provides the produced recommended-advertisement priority information to the advertisement-select-screen producing section 18 (Step S15).

The advertisement-select-screen producing section 18 produces the advertisement select screen according to the information about the advertisements matching with the viewer α, the information about the corresponding attributions and rewards, and the recommended-advertisement priority information, and provided the produced advertisement select screen to the display unit 27 of the terminal 28 of the viewer α so as to display the advertisement select screen on the display unit 27 (Step S16).

Then, the viewer α checks the advertisements and the corresponding reward in the advertisement select screen as shown in Fig. 6 or 7 displayed on the display unit 27 to designate one or more of desired advertisements and determine how to insert each of the advertisements in contents to be viewed, and provides the determined information from the terminal 28 of the viewer α to the advertisement-integrated-contents-viewing-style determining section 19 (Step S17).

The advertisement-integrated-contents-viewing-style determining section 19 produces information about a position where the advertisement is to be inserted, according to the determined information, and provides the produced advertisement-insert-position information to the contents server 24 through the advertisement-insert-position instructing section 20, and then the contents server 24 prepares a processing of inserting the advertisement data according to the received advertisement-insert-position information (Step S18).

The advertisement-integrated-contents-viewing-style determining section 19 also produces information about an instruction of inserting the advertisements according to the determined information, and provides the produced advertisement-insert-instruction information to the advertisement server 23 through the advertisement-data transmission instructing section 21 (Step S19).

According to the received advertisement-insert-instruction information, the advertisement server 23 provides a data of the designated advertisement for the corresponding advertisement insert position, to the contents server 24 (Step S20).

Subsequently to Steps S18 and S20, the contents server 24 produces a combination data of the contents data and the advertisement data according to the advertisement-insert-position information and the advertisement data, and provides the combination data to the terminal 28 of the viewer α as an advertisement-integrated-contents data (Step S21). Then, the viewer α views the advertisement-integrated contents X (Step S22). In this stage, it goes on the assumption that the advertisement A has been viewed by the viewer α. However, it may be confirmed by means of a device capable of confirming whether the viewer α has viewed the advertisement A.

Then, the terminal 28 provides information about the IDs of the advertisement A and other advertisement which have been viewed to the individual-customer-based advertisement viewing record database 26 together with the viewing state data to update the corresponding information in individual-customer-based advertisement viewing record database 26, and then the operation proceeds to the following Step S24 and the aforementioned Step S10 (Step S23).

A viewing record data for each of the advertisements is calculated with reference to the individual-customer-based advertisement viewing record database 26, and the calculated data are provided to the advertisement-viewing-state searching section 22 and the ad-market update instructing section 12 (Step S 24).

In response to the received viewing record data for each of the advertisements, if any one of the advertisements gets up to an upper limit number of viewings with respect to a specific advertisement-viewing condition, its registration with respect to the advertisement-viewing condition is deleted from the ad-market database 11 by the ad-market update instructing section 12. Further, if any one of the advertisements is required to change its advertisement-viewing condition, the ad-market update instructing section 12 provides an instruction of changing the advertisement-viewing condition to the ad-market database 11, and the operation proceeds to Step S12 (Step S25)

Subsequently to Step 24, the sponsor (or advertising agent) of the advertisement A searches the viewing record of the advertisement A by the advertisement-viewing-state searching section 22, and reviews whether the individual-advertisement-viewing condition-based advertisement-viewing reward P (A, n) should be modified. If modified, the sponsor determines a new advertisement-viewing reward P (A, n), and goes to Step S1 (Step S26). If not, the operation is completed (Step S27).

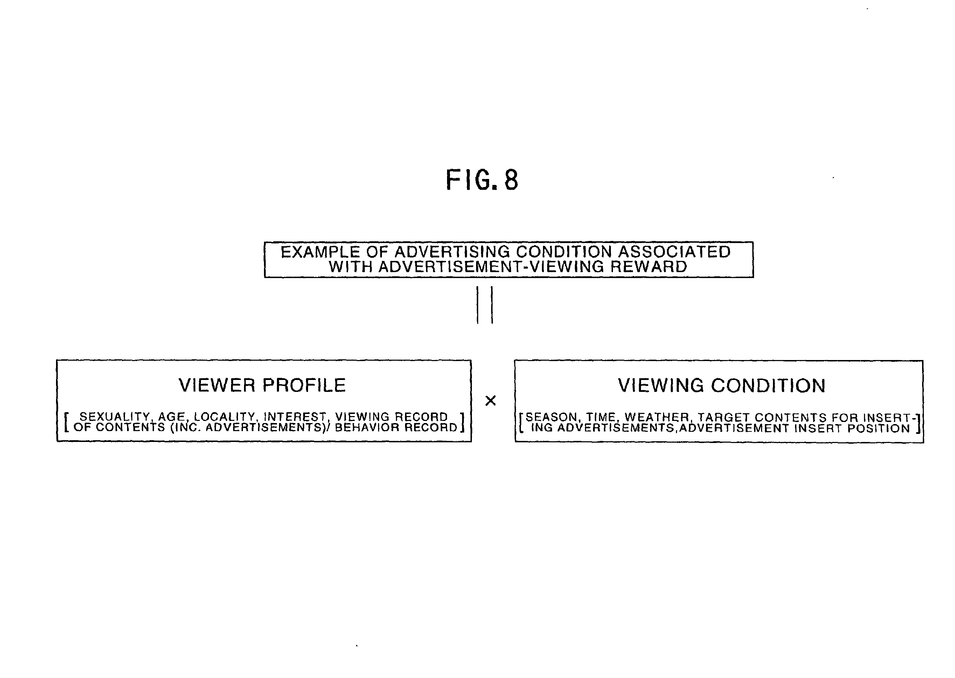

One example of the advertisement-viewing condition is shown in Fig. 8.

The features of the above system can be categorized into the following three points.

### 1. Free Selection of Advertisements by Viewer (See Steps S17 to S21)

Any viewers can select a viewing style, such as "kind/category or amount of the advertisements to be viewed, or refusal of viewing of any advertisement, on their own will. The fee of a pay program to be viewed by the viewers will be varied depending on the selected viewing style.

### 2. Free and Real Time Setting of Advertisement-viewing reward by Sponsor (see Steps S1, S2 and S26)

Sponsor can freely assign the advertisement-viewing reward to an advertisement to be viewed by a target (viewers). This allows the sponsors to clearly focus on a specific target (viewers). Further, the sponsors can watch how much their advertisements are viewed by the target (viewers) to change or modify the advertisement-viewing reward in real time. This allows the advertisement time-frame transaction to be implemented based on market principles (principle of market mechanism), and thereby the fee of the advertisement time-frame can be adequately arranged to achieve a balanced relationship between demand and supply.

### 3. Free Setting of Advertisement Set by Advertising Agent (see Steps S14 and S15)

If the viewers are forced to check the demand from sponsors or a list of the advertisement-viewing rewards payable to the target (viewers) and select a desired advertisement at any time when they view desired contents, it will be a complicated operation for the viewers. From this point of view, the system allows an advertising agent (or other administrator) to automatically produce a recommended advertisement set to be inserted in the contents, for each of the viewers, so as to provide an access-friendly operation for the viewers. For example, an applicable advertisement set includes a "cost-oriented set" comprising one or more advertisements selected to provide a lowest fee, and a "automobile set" comprising one or more advertisements preferentially selected from advertisements associated with automobiles.

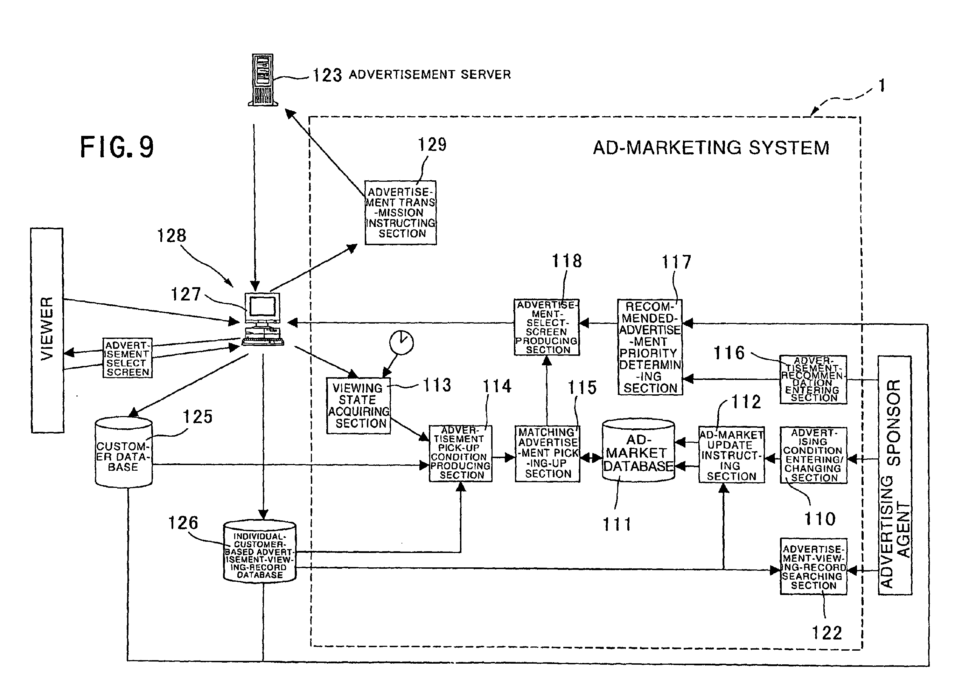

Fig. 9 is a schematic block diagram showing an advertisement time-frame transaction system according to another embodiment of the present invention.

In this embodiment, the advertisement time-frame transaction system 100 comprises;
an advertisement-viewing condition entering/changing section 110 for entering/changing advertisement attribution information and an advertisement-viewing reward for each of advertisement-viewing conditions imposed by the advertiser,
an ad-market database 111 for storing the advertisement attribution information and the advertisement-viewing rewards which are entered/changed by the advertisement-viewing condition entering/changing section 110,
an ad-market update instructing section 112 for identifying the advertisement attribution information and the advertisement-viewing rewards entered/changed by the advertisement-viewing condition entering/changing section 110, and registering/overwritingly registering them in the ad-market database 111,
a viewing state acquiring section 113 for acquiring an advertisement viewing state in response to entered information about an advertisement ID, a scheduled time for viewing the advertisement, and date/weather, to provide information about an advertisement viewing state,
an advertisement pick-up condition producing section 114 for producing a pick-up condition of one or more advertisement matching with a viewer α, according to customer information, the viewing state information and advertisement viewing record, and providing the advertisement pick-up condition,
a matching advertisement picking-up section 115 for picking up the information about the advertisements matching with the viewer α and the information about corresponding attributions and rewards from the ad-market database 111 according to the advertisement pick-up condition received from the advertisement pick-up condition producing section 114,
an advertisement-recommendation entering section 116 for providing information about one or more recommended advertisements in response to entered advertisement recommendation information (designation of one or more advertisements to be recommended, recommendation text, special incentive or the like),
a recommended-advertisement priority determining section 117 for producing recommended-advertisement priority information about a priority of the recommended-advertisements according to the advertisement recommendation information, the customer information and the individual-customer-based advertisement viewing record, and providing the recommended-advertisement priority information,
an advertisement-select-screen producing section 118 for producing an advertisement select screen according to the information about the advertisements matching with the viewer α, the information about the corresponding attributions and rewards, and the recommended-advertisement priority information, and providing the advertisement select screen,
an advertisement transmission instructing section 129 for providing information about an advertising instruction of transmitting to the viewer α the advertisement designated by the viewer α who has checked the advertisement and the corresponding advertisement-viewing reward displayed on the display select screen, and
an advertisement-viewing-state searching section 122 for searching a viewing record of the advertisement.

The advertisement time-frame transaction system 100 of Fig. 9 further includes;
an advertisement server 123 for providing the data of the designated advertisement according to the advertising instruction information received from the advertisement transmission instructing section 129,
a customer database 125 for storing customer information such as the attribute, preference, or the like of the viewer α.
an individual-customer-based advertisement viewing record database 126 for storing an advertisement viewing record (or information about the ID of the advertisement which has been viewed up to the upper limit number of times) of the viewer α, and
a terminal 128 having a display unit 127 for displaying a guide screen (screen for making an application for viewing) of contents X, an advertisement-select-screen, and/or the advertisement-integrated-contents.

The system of Fig. 9 is similar to that of Fig. 1, excepting that no contents is included and thereby no associated component or element is includes. The operation of the system of Fig. 9 can be obviously understood from the description of the operation of the system of Fig.1, and its description will be omitted.

As described above, according to the present invention there is provided an advertisement time-frame transaction system comprising assigning means for selecting a viewer according to information of viewers and allow an advertiser of an advertisement to assign an advertisement-viewing reward to the advertisement for the selected viewer, designating means for allowing the selected viewer to designate whether he/she will view the advertisement having the assigned advertisement-viewing reward, and changing means for allowing the advertiser to change the advertisement-viewing reward of the advertisement in real time, depending on the information about the designation to be provided from the designating means when the viewer has designated whether he/she views the advertisement.

The advertisement time-frame transaction system of the present invention may further include a terminal having a display unit, and the assigning means may include an advertisement information database for storing a plurality of information about advertisements and information about corresponding advertisement-viewing rewards, matching-advertisement selecting means for selecting the information about one or more advertisements matching with the viewer and the information about corresponding one or more advertisement-viewing rewards, from the advertisement information database according to a given condition, and advertisement-select-screen producing means for producing an advertisement select screen according to given information and instructing the terminal to display the advertisement select screen on the display unit.

In the advertisement time-frame transaction system of the present invention, the designating means may include viewing-style-information producing means for allowing the viewer to produce viewing style information about a style of viewing the advertisement, according to the information displayed on the advertisement select screen of the display unit when the viewer designates to view the advertisement having the assigned advertisement-viewing reward, advertisement-insert-position-information producing means for producing advertisement-insert-position information about an advertisement insert position where the designated advertisement is to be inserted, according to the viewing style information received from the viewing-style-information producing means, and advertisement-insert-instruction-information producing means for producing advertisement-insert-instruction information about an instruction of inserting the advertisement, according to the viewing style information received from the viewing-style-information producing means.

The advertisement time-frame transaction system of the present invention may further include an advertisement server for providing a data of the designated advertisement for the corresponding advertisement insert position according to the advertisement-insert-instruction information, and a contents server for producing a combination data of the advertisement data received from the advertisement server and a contents data stored in the contents server according to the advertisement-insert-position information and the advertisement data, and instructing the terminal to display the contents with the advertisement on the display unit according to the combination data.

In the advertisement time-frame transaction system of the present invention, the changing means may include modifying means for allowing the advertiser to modify the advertisement-viewing reward of the advertisement when the viewer has not designated to view the advertisement having the assigned advertisement-viewing reward, and modified-advertisement-select-screen producing means for producing information corresponding to the advertisement-viewing reward modified by the modifying means and instructing the terminal to display the information on the advertisement select screen of the display unit in real time.

The advertisement time-frame transaction system of the present invention may further include a customer information database for storing information about customers including the viewer, an individual-customer-based advertisement viewing record database for storing individual-customer-based advertisement viewing record information about a viewing record of advertisements for each of the customers including the viewer, advertisement-recommendation entering means for entering advertisement recommendation information about one or more recommended advertisements, and recommended-advertisement priority determining means for producing information about a priority of the recommended advertisements, according to the advertisement recommendation information entered from the advertisement-recommendation entering means, the customer information of the viewer stored in the customer information database, and the individual-customer-based advertisement viewing record information of the viewer stored in the individual-customer-based advertisement viewing record database.

The advertisement time-frame transaction system of the present invention may further include viewing state searching means for searching information about a viewing record of the advertisement, and the changing means may be adapted to allows the advertiser to determine if the advertisement-viewing reward for each of advertisement-viewing conditions imposed by the advertiser should be changed, depending on the viewing record of the advertisement searched by the viewing state searching means and to change the advertisement-viewing reward depending on the information about the determination.

Further, according to the present invention, there is provided an advertisement time-frame transaction method comprising the steps of; selecting a viewer according to information about viewers; allowing an advertiser of an advertisement to assign an advertisement-viewing reward to the advertisement for the selected viewer, allowing the selected viewer to designate whether he/she will view the advertisement having the assigned advertisement-viewing reward; when the viewer has designated whether he/she views the advertisement, allowing the advertiser to change the advertisement-viewing reward of the advertisement in real time, depending on the information about the designation.

In the advertisement time-frame transaction method of the present invention, the assigning step may include the steps of: storing a plurality of information about advertisements and information about corresponding advertisement-viewing rewards in an advertisement information database; selecting the information of one or more advertisements matching with the viewer and the information about corresponding one or more advertisement-viewing rewards, from the advertisement information database according to a given condition; and producing an advertisement select screen according to given information and instructing a terminal to display the advertisement select screen on a display unit of the terminal.

In the advertisement time-frame transaction method of the present invention, the designating step may include the steps of: when the viewer designates to view the advertisement having the assigned advertisement-viewing reward, allowing the viewer to produce viewing style information about a style of viewing the advertisement, according to the information displayed on the advertisement select screen of the display unit; producing advertisement-insert-position information about an advertisement insert position where the designated advertisement is to be inserted, according to the produced viewing style information; and producing advertisement-insert-instruction information about an instruction of inserting the advertisement, according to the produced viewing style information.

The advertisement time-frame transaction method of the present invention, may further include the steps of providing a data of the designated advertisement for the corresponding advertisement insert position according to the advertisement-insert-instruction information, and producing a combination data of the advertisement data and a contents data according to the advertisement-insert-position information and the advertisement data, and instructing the terminal to display the contents with the advertisement on the display unit according to the combination data.

In the advertisement time-frame transaction method of the present invention, the changing step may include the steps of: when the viewer has not designated to view the advertisement having the assigned advertisement-viewing reward, allowing the advertiser to modify the advertisement-viewing reward of the advertisement; and producing information corresponding to the modified advertisement-viewing reward and instructing the terminal to display the information on the advertisement select screen of the display unit in real time.

The advertisement time-frame transaction method of the present invention may further include the steps of: storing information about customers including the viewer, in a customer information database; storing individual-customer-based advertisement viewing record information about a viewing record of advertisements for each of the customers including the viewer, in an individual-customer-based advertisement viewing record database; entering advertisement recommendation information about one or more recommended advertisements; and producing information about a priority of the recommended advertisements, according to the entered advertisement recommendation information, the customer information of the viewer stored in the customer information database, and the individual-customer-based advertisement viewing record information of the viewer stored in the individual-customer-based advertisement viewing record database.

The advertisement time-frame transaction method of the present invention may further include the step of searching information about a viewing record of the advertisement, and the changing step may include the step of allowing the advertiser to determine if the advertisement-viewing reward for each of advertisement-viewing conditions imposed by the advertiser should be changed, depending on the viewing record of the advertisement searched by the viewing state searching means and to change the advertisement-viewing reward depending on the information about the determination.

The advertisement time-frame transaction method of the present invention may further include the steps of storing data of advertisements in a storage section of the terminal in advance, and stopping the replay of contents at each position for the designated advertisement to be inserted so as to call data of the designated advertisement, and instructing the terminal to display the designated advertisement data on the display unit.

The advertisement time-frame transaction method of the present invention may further include the steps of providing data of the designated advertisement, and instructing the terminal to display the designated advertisement data on the display unit

As described above, based on the concept that a sponsor or advertiser pays a reward to a viewing time of an advertisement to be viewed by a viewer, the present invention allows a plurality of sponsors to changeably assign an advertisement-viewing reward to an advertisement time-frame for each target and to transact under open and fair price competition, and thereby the fee of the advertisement time-frame can be adequately arranged to achieve a balanced relationship between demand and supply according to market principles (principle of market mechanism).

The reward can be flexibly changed/modified in real time by a computer system.

In response to changes in competitive situations or viewing circumstances, the respective rewards for the advertisement time-frames will be appropriately determined at any time.

Differently from actual markets, a viewer placing a high value on advertising viewings would view a desired advertisement even by receiving a minus-reward, i.e. by paying money.

The viewer will determine the selection of a desired advertisement while predicting whether the advertisement-viewing reward thereof will be increased. This situation can be said that the advertisement time-frame transaction will approach stock transactions (securities dealing).

Further, viewers can select desired advertisements and determine the amount of rewards to be received before viewing advertisements. Thus, the function of preventing advertisements from being skipped or confirming viewing of advertisements will be accepted by the viewer without any resistance, and advertisements will be evaluated at the intrinsic value.

According to the above features, the advertisement-viewing reward can be freely determined by consumers, and thereby advertisement time-frames can be adequately allocated under market principles. This allows advertisement time-frames to be transacted in a price providing a balanced relationship between demand and supply and to be appropriately provided to consumers and advertisers in proportion to respective demands thereof.

## Claims

1. An advertisement time-frame transaction system comprising:
assigning means for selecting a viewer according to information about viewers and allowing an advertiser of an advertisement to assign an advertisement-viewing reward to said advertisement for said selected viewer;
designating means for allowing said selected viewer to designate whether he/she will view said advertisement having said assigned advertisement-viewing reward; and
changing means for allowing said advertiser to change the advertisement-viewing reward of said advertisement in real time, depending on the information about the designation to be provided from said designating means when said viewer has designated whether he/she views said advertisement.

2. An advertisement time-frame transaction system as defined in claim 1, which further includes a terminal having a display unit,
wherein said assigning means includes:
an advertisement information database for storing a plurality of information about advertisements and information about corresponding advertisement-viewing rewards;
matching-advertisement selecting means for selecting the information about one or more advertisements matching with said viewer and the information about corresponding one or more advertisement-viewing rewards, from said advertisement information database according to a given condition; and
advertisement-select-screen producing means for producing an advertisement select screen according to given information and instructing said terminal to display said advertisement select screen on said display unit.

3. An advertisement time-frame transaction system as defined in claim 1, wherein said designating means includes:
viewing-style-information producing means for allowing said viewer to produce viewing style information about a style of viewing the advertisement, according to the information displayed on said advertisement select screen of said display unit, when said viewer designates to view the advertisement having the assigned advertisement-viewing reward;
advertisement-insert-position-information producing means for producing advertisement-insert-position information about an advertisement insert position where said designated advertisement is to be inserted, according to said viewing style information received from said viewing-style-information producing means; and
advertisement-insert-instruction-information producing means for producing advertisement-insert-instruction information about an instruction of inserting said advertisement, according to said viewing style information received from said viewing-style-information producing means.

4. An advertisement time-frame transaction system as defined in claim 3, which further includes:
an advertisement server for providing a data of the designated advertisement for the corresponding advertisement insert position according to said advertisement-insert-instruction information; and
a contents server for producing a combination data of said advertisement data received from said advertisement server and a contents data stored in said contents server according to said advertisement-insert-position information and said advertisement data, and instructing said terminal to display said contents with said advertisement on said display unit according to said combination data.

5. An advertisement time-frame transaction system as defined in claim 2, wherein said changing means includes:
modifying means for allowing said advertiser to modify the advertisement-viewing reward of the advertisement when said viewer has not designated to view the advertisement having the assigned advertisement-viewing reward; and
modified-advertisement-select-screen producing means for producing information corresponding to said advertisement-viewing reward modified by said modifying means, and instructing said terminal to display said information on said advertisement select screen of said display unit in real time.

6. An advertisement time-frame transaction system as defined in claim 1, which further includes:
a customer information database for storing information about customers including said viewer;
an individual-customer-based advertisement viewing record database for storing individual-customer-based advertisement viewing record information about a viewing record of advertisements for each of the customers including said viewer;
advertisement-recommendation entering means for entering advertisement recommendation information about one or more recommended advertisements; and
recommended-advertisement priority determining means for producing information about a priority of said recommended advertisements, according to said advertisement recommendation information entered from said advertisement-recommendation entering means, said customer information of said viewer stored in said customer information database, and said individual-customer-based advertisement viewing record information of said viewer stored in said individual-customer-based advertisement viewing record database.

7. An advertisement time-frame transaction system as defined in claim 1, which further includes viewing state searching means for searching information about a viewing record of said advertisement,
wherein said changing means is adapted to allows said advertiser to determine if the advertisement-viewing reward for each of advertisement-viewing conditions imposed by the advertiser should be changed, depending on said viewing record of said advertisement searched by said viewing state searching means and to change said advertisement-viewing reward depending on the information about said determination.

8. An advertisement time-frame transaction method comprising the steps of:
selecting a viewer according to information about viewers;
allowing an advertiser of an advertisement to assign an advertisement-viewing reward to said advertisement for said selected viewer;
allowing said selected viewer to designate whether he/she will view said advertisement having said assigned advertisement-viewing reward;
when said viewer has designated whether he/she views said advertisement, allowing said advertiser to change the advertisement-viewing reward of said advertisement in real time, depending on the information about said designation.

9. An advertisement time-frame transaction method as defined in claim 8, wherein said assigning step includes the steps of:
storing a plurality of information about advertisements and information about corresponding advertisement-viewing rewards in an advertisement information database;
selecting the information of one or more advertisements matching with said viewer and the information about corresponding one or more advertisement-viewing rewards, from said advertisement information database according to a given condition; and
producing an advertisement select screen according to given information and instructing a terminal to display said advertisement select screen on a display unit of said terminal.

10. An advertisement time-frame transaction method as defined in claim 8, wherein said designating step includes the steps of:
when said viewer designates to view the advertisement having the assigned advertisement-viewing reward, allowing said viewer to produce viewing style information about a style of viewing the advertisement, according to the information displayed on said advertisement select screen of said display unit;
producing advertisement-insert-position information about an advertisement insert position where said designated advertisement is to be inserted, according to said produced viewing style information; and
producing advertisement-insert-instruction information about an instruction of inserting said advertisement, according to said produced viewing style information.

11. An advertisement time-frame transaction method as defined in claim 10, which further includes the steps of:
providing a data of the designated advertisement for the corresponding advertisement insert position according to said advertisement-insert-instruction information; and
producing a combination data of said advertisement data and a contents data according to said advertisement-insert-position information and said advertisement data, and instructing said terminal to display said contents with said advertisement on said display unit according to said combination data.

12. An advertisement time-frame transaction method as defined in claim 9, wherein said changing step includes the steps of:
when said viewer has not designated to view the advertisement having the assigned advertisement-viewing reward, allowing said advertiser to modify the advertisement-viewing reward of said advertisement; and
producing information corresponding to said modified advertisement-viewing reward, and instructing said terminal to display said information on said advertisement select screen of said display unit in real time.

13. An advertisement time-frame transaction method as defined in claim 8, which further includes the steps of:
storing information about customers including said viewer, in a customer information database;
storing individual-customer-based advertisement viewing record information about a viewing record of advertisements for each of the customers including said viewer, in an individual-customer-based advertisement viewing record database;
entering advertisement recommendation information about one or more recommended advertisements; and
producing information about a priority of said recommended advertisements, according to said entered advertisement recommendation information, said customer information of said viewer stored in said customer information database, and said individual-customer-based advertisement viewing record information of said viewer stored in said individual-customer-based advertisement viewing record database.

14. An advertisement time-frame transaction method as defined in claim 8, which further includes the step of searching information about a viewing record of said advertisement,
wherein said changing step includes the step of allowing said advertiser to determine if the advertisement-viewing reward for each of advertisement-viewing conditions imposed by the advertiser should be changed, depending on said viewing record of said advertisement searched by said viewing state searching means and to change said advertisement-viewing reward depending on the information about said determination.
